# EUROPEAN PATENT APPLICATION

(11) **EP 4 725 770 A1**
(43) Date of publication of application: **15.04.2026**
(21) Application number: 25741374.0
(22) Date of filing: 07.01.2025
(51) Int. Cl.: B60R 11/02, B60R 11/00

(54) **VEHICLE CEILING-MOUNTED SCREEN AND VEHICLE**

(30) Priority: 15.01.2024 CN 202410057555
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: JIANG, Kun, Ningbo, Zhejiang 315899 (CN); XU, Yun, Ningbo, Zhejiang 315899 (CN); LI, Guolin, Ningbo, Zhejiang 315899 (CN); ZENG, Wei, Ningbo, Zhejiang 315899 (CN); CHENG, Gaochao, Ningbo, Zhejiang 315899 (CN); GAO, Wenqing, Ningbo, Zhejiang 315899 (CN); LIU, Zhiyong, Ningbo, Zhejiang 315899 (CN); ZHAO, Weigang, Ningbo, Zhejiang 315899 (CN); WU, Chenqing, Ningbo, Zhejiang 315899 (CN)
(74) Representative: Michalski Hüttermann & Partner Patentanwälte mbB
(86) International application number: PCT/CN2025/070919
(87) International publication number: WO 2025/152811

(57) **Abstract**

A vehicle ceiling-mounted screen includes a mounting plate (10), a translation assembly (20), and a display screen assembly (30). The translation assembly (20) is at an upper side of the mounting plate (10). The display screen assembly (30) includes a display screen (31) and display screen connecting components (32). The display screen (31) is at a lower side of the mounting plate (10). The display screen connecting components (20) are at sides of the translation assembly (20) and the display screen (31) and respectively connected to the translation assembly (20) and the display screen (31). The vehicle ceiling-mounted screen occupies a small space as a whole, and the translation assembly (20) is concealed by the display screen (31) and the mounting plate (10), thereby achieving a floating display screen effect. Also provided a vehicle including the vehicle ceiling-mounted screen.

## Description

### CROSS-REFERENCE TO RELATED APPLICATIONS

The application claims priority to Chinese Patent Application No. 202410057555.3, filed with the China Patent Office on January 15, 2024, the entire contents of which are incorporated herein by reference.

### TECHNICAL FIELD

Embodiments of the present application relate to, but are not limited to, the technical field of vehicle components, and in particular, relate to, but are not limited to, a vehicle ceiling-mounted screen and a vehicle.

### BACKGROUND

With the rapid development of the intelligent vehicle industry, intelligence and networking have become trends in the vehicle industry. Large-screen, personalized, and ultra-high-definition vehicle ceiling-mounted screens are gradually becoming popular.

### SUMMARY

Below is a summary of the subject matters described in detail herein. The summary is not intended to limit the protection scope of the claims.

According to a first aspect of the embodiments of the present specification, there is provided a vehicle ceiling-mounted screen, including: a mounting plate; a translation assembly at an upper side of the mounting plate; and a display screen assembly including a display screen, the display screen being at a lower side of the mounting plate, where the translation assembly is configured to drive the display screen assembly to move.

In some embodiments, the vehicle ceiling-mounted screen further includes: a roll-up assembly including a roll-up mechanism and a screen, where the roll-up mechanism is connected to a lower end of the display screen, an end of the screen is connected to the mounting plate, and another end of the screen is wound within the roll-up mechanism.

In some embodiments, the vehicle ceiling-mounted screen further includes: a roll-up assembly including a roll-up mechanism and a screen; and a connection plate below the mounting plate and connected to a movable guide rail of the translation assembly; where the roll-up mechanism is connected to a lower end of the display screen, an end of the screen is connected to the connection plate, and another end of the screen is wound within the roll-up mechanism.

In some embodiments, when the display screen flips downward, the roll-up mechanism is synchronously driven to move downward, causing the screen within the roll-up mechanism to be pulled out.

In some embodiments, the display screen assembly further includes display screen connectors, at sides of the translation assembly and the display screen, and configured to connect the translation assembly and the display screen; the translation assembly includes a movable guide rail, a fixed guide rail, and a first driving component, the fixed guide rail is fixed at the upper side of the mounting plate, the movable guide rail is slidably connected to the fixed guide rail, the first driving component is at the upper side of the mounting plate and configured to drive the movable guide rail to slide relative to the fixed guide rail in a vehicle length direction; and where the display screen is connected to the movable guide rail via the display screen connectors.

In some embodiments, the first driving component includes a first motor, a cable reel, and a cable, where a middle portion of the cable is wound around the cable reel, two ends of the cable are respectively connected to two ends of the movable guide rail, and the two ends of the cable are arranged opposite to a rotation direction of the cable reel; and wherein an output shaft of the first motor is coaxially arranged with the cable reel, and when the output shaft rotates, the cable is driven to wind around the cable reel in forward rotation or reverse rotation.

In some embodiments, the first driving component further includes a first cable end fixing portion including a first cable end fixing plate and a first nail cap, where the first cable end fixing plate is fixed to a first end of the movable guide rail and at a side close to the first driving component; and the first cable end fixing plate is provided with a first notch, and the first nail cap is connected to a tail end of the cable and fixed in the first notch.

In some embodiments, the first driving component further includes a second cable end fixing portion including a second cable end fixing plate and a second nail cap, where the second cable end fixing plate is fixed to a second end of the movable guide rail, and the first cable end fixing plate and the second cable end fixing plate are at a same side of the first driving component; and the second cable end fixing plate is provided with a second notch, and the second nail cap is connected to a head end of the cable and fixed in the second notch.

In some embodiments, the first driving component further includes a first bracket and a second bracket, where the first bracket is at a top of the mounting plate and at the first end of the movable guide rail, the second bracket is connected to the second end of the movable guide rail; and the head end of the cable passes through the first bracket and is fixed to the second end of the movable guide rail via the second cable end fixing portion, and the tail end of the cable passes through the second bracket and is fixed to the first end of the movable guide rail via the first cable end fixing portion.

In some embodiments, the mounting plate further includes a mounting portion including: a cable reel base fixed at the upper side of the mounting plate; and a cable reel cover plate, covered the cable reel base to form a chamber for accommodating the first motor and the cable reel.

In some embodiments, there are two translation assemblies respectively arranged at two ends of the upper side of the mounting plate; there are two display screen connectors which are respectively connected with the two translation assemblies and two ends of the display screen; a size of the display screen in a vehicle width direction is greater than or equal to sizes of the mounting plate and the two translation assemblies in the vehicle width direction.

In some embodiments, the vehicle ceiling-mounted screen further includes a connection plate below the mounting plate and connected to the movable guide rail; and the vehicle ceiling-mounted screen further includes a flip assembly on the connection plate and configured to drive the display screen to flip up or down.

In some embodiments, the mounting plate has a bottom plate and a top plate above the bottom plate, a first accommodating space is formed below the top plate, and a second accommodating space is formed above the bottom plate; and where the first driving component is in the second accommodating space, and a part of the flip assembly is in the first accommodating space.

In some embodiments, the flip assembly includes a link assembly and a second driving component, the link assembly includes a first link rod and a second link rod, an end of the first link rod is fixedly connected to the display screen, another end of the first link rod is hingedly connected to an end of the second link rod, and another end of the second link rod is hingedly connected to the second driving component; and where an end of the connection plate close to the display screen is provided with a strip-shaped gap for rotation of the first link rod and the second link rod.

In some embodiments, the display screen assembly further includes a display screen shaft, the display screen is connected to the display screen shaft, two ends of the display screen shaft are respectively connected to the display screen connectors, and an end of the link assembly is fixedly connected to a middle portion of the display screen shaft.

In some embodiments, the link assembly includes a first link rod and a second link rod, an end of the first link rod is fixedly connected to the middle portion of the display screen shaft, another end of the first link rod is hingedly connected to an end of the second link rod, and another end of the second link rod is hingedly connected to the second driving component.

In some embodiments, the second driving component includes a slider, a second motor, and a screw rod, another end of the second link rod is hingedly connected to the slider, and the second motor is configured to drive the slider to translate on the screw rod to drive a rotation of the second link rod.

In some embodiments, the vehicle ceiling-mounted screen further includes a ceiling-mounted screen fixing component for connecting to a roof of a vehicle, the ceiling-mounted screen fixing component being fixed at an upper side of the top plate; and where a size of the display screen in a vehicle width direction is greater than or equal to a size of the ceiling-mounted screen fixing component in the vehicle width direction.

According to a second aspect of the embodiments of the present specification, there is provided a vehicle, including the vehicle ceiling-mounted screen according to the first aspect described above.

The application has the following beneficial effects: by arranging the translation assembly at the upper side of the mounting plate and arranging the display screen at the lower side of the mounting plate, the translation assembly is concealed by the display screen and the mounting plate, achieving a floating display screen effect, and the overall ceiling-mounted screen occupies a small space and is aesthetically pleasing.

It should be understood that the above general description and the following detailed description are exemplary and explanatory only and are not restrictive of the specification. Other aspects may be apparent after reading and understanding the drawings and detailed description.

### BRIEF DESCRIPTION OF DRAWINGS

The drawings herein are incorporated into the specification and constitute a part of the specification, illustrate embodiments consistent with the present application, and are used together with the specification to explain the principles of the present application.
FIG. 1 is a schematic structural diagram of a vehicle ceiling-mounted screen according to the present application.
FIG. 2 is a schematic structural diagram of a flip assembly in a vehicle ceiling-mounted screen according to the present application.
FIG. 3 is a schematic diagram of a display screen in a closed state in a vehicle ceiling-mounted screen according to the present application.
FIG. 4 is a schematic diagram of a display screen in an open state in a vehicle ceiling-mounted screen according to the present application.
FIG. 5 is a schematic diagram of a display screen moved to a front end and in a closed state in a vehicle ceiling-mounted screen according to the present application.
FIG. 6 is a schematic diagram of a display screen moved to the front end and in an open state in a vehicle ceiling-mounted screen according to the present application.
FIG. 7 is a schematic diagram of a display screen moved to a rear end and in a closed state in a vehicle ceiling-mounted screen according to the present application.
FIG. 8 is a schematic diagram of a display screen moved to the rear end and in an open state in a vehicle ceiling-mounted screen according to the present application.
FIG. 9 is a schematic diagram of an illumination component in an exposed state in a vehicle ceiling-mounted screen according to the present application.
FIG. 10 is a schematic diagram of a screen in an open state in a vehicle ceiling-mounted screen according to the present application.
FIG. 11 is a schematic structural diagram of a translation assembly in a vehicle ceiling-mounted screen according to the present application.
FIG. 12 is a schematic structural diagram of a first motor in a vehicle ceiling-mounted screen according to the present application.
FIG. 13 is a schematic structural diagram of a cable reel in a vehicle ceiling-mounted screen according to the present application.
FIG. 14 is a schematic structural diagram of a cable reel cover plate in a vehicle ceiling-mounted screen according to the present application.
FIG. 15 is a schematic structural diagram of a mounting plate and a cable reel base in a vehicle ceiling-mounted screen according to the present application.

### Reference Numerals:

10-mounting plate; 11-ceiling-mounted screen mounting hole; 12-ceiling-mounted screen fixing component; 13-cable reel base; 14-cable reel cover plate; 141-cable guide groove; 15-bottom plate; 16-top plate; 17-first accommodating space; 18-second accommodating space;
20-translation assembly; 21-movable guide rail; 211-first end; 212-second end; 213-engaging portion; 22-fixed guide rail; 23-first driving component; 231-first motor; 2311-external teeth; 232-cable reel; 2321-groove; 2322-internal teeth; 233-cable; 2331-head end; 2332-tail end; 234-first bracket; 235-second bracket; 236-first cable end fixing plate; 2361-first notch; 237-first nail cap; 238-second cable end fixing plate; 2381-second notch; 24-connection plate; 241-gap;
30-display screen assembly; 31-display screen; 32-display screen connector; 33-display screen shaft;
40-flip assembly; 41-link assembly; 411-first link rod; 412-second link rod; 42-second driving component; 421-slider; 422-second motor; 423-screw rod;
50-roll-up assembly; 51-roll-up mechanism; 52-screen;
60-illumination component.

### DETAILED DESCRIPTION

Embodiments will be described in detail herein, with examples illustrated in the accompanying drawings. When the following description refers to the drawings, unless otherwise indicated, the same numerals in different drawings represent the same or similar elements. The embodiments described in the following examples do not represent all implementations consistent with the present application. Instead, they are merely examples of devices consistent with certain aspects of the present application, as detailed in the appended claims.

The terms used in this specification are for the purpose of describing particular embodiments only and are not intended to limit the specification. The singular forms "a," "said," and "the" used in this specification and the appended claims are also intended to include plural forms, unless the context clearly indicates otherwise. It should also be understood that the term "and/or" as used herein refers to and encompasses any and all possible combinations of one or more of the associated listed items.

It should be understood that although the terms first, second, third, etc., may be used in this specification to describe various information, this information should not be limited by these terms. These terms are only used to distinguish information of the same type from one another. For example, without departing from the scope of this specification, first information may also be referred to as second information, and similarly, second information may also be referred to as first information. Depending on the context, the word "if" as used herein may be interpreted as "when" or "upon" or "in response to determining".

Vehicle ceiling-mounted screens can generally flip up or down, or move horizontally along the vehicle body direction to meet the human-machine viewing distance needs of different passengers. However, in related arts, the mechanisms driving the flipping and translation of vehicle ceiling-mounted screens have complex structures and heavy weight, and are exposed outside the display screen, affecting aesthetics. Therefore, it is necessary to provide an improved vehicle ceiling-mounted screen and vehicle. The embodiments of this specification are described in detail below.

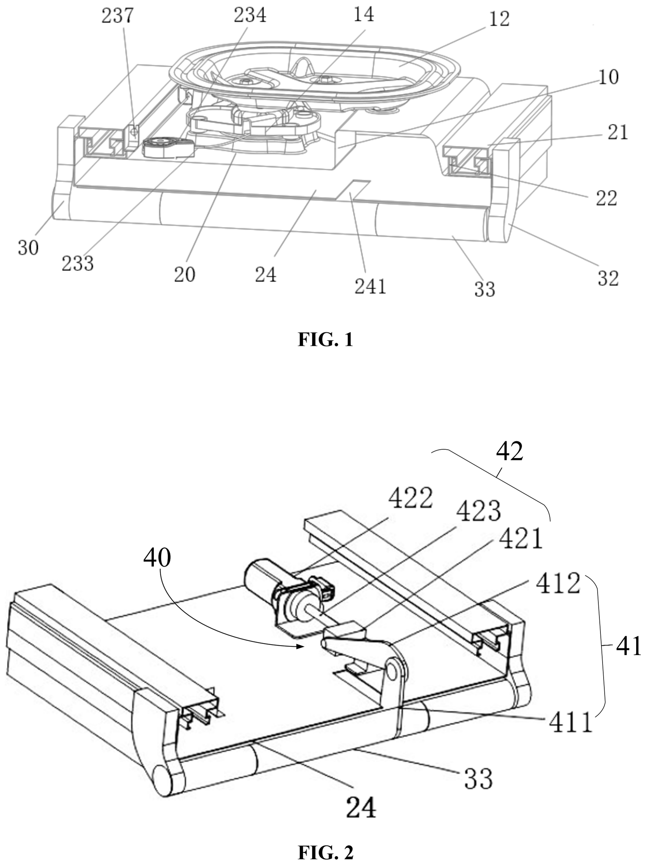

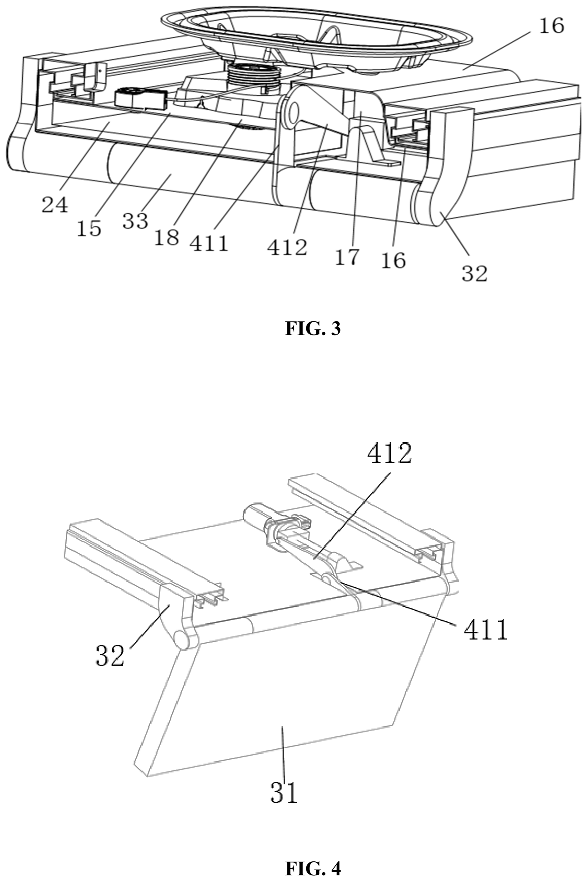

Referring to FIG. 1 and FIG. 4, an embodiment provides a vehicle ceiling-mounted screen. The vehicle ceiling-mounted screen includes a mounting plate 10, a translation assembly 20, and a display screen assembly 30. The translation assembly 20 is at an upper side of the mounting plate 10. The display screen assembly 30 includes a display screen 31. The display screen 31 is at a lower side of the mounting plate 10. The translation assembly 20 is configured to drive the display screen assembly 30 to move, i.e., move in the vehicle length direction.

In the embodiment, by arranging the translation assembly 20 at the upper side of the mounting plate 10 and arranging the display screen 31 at the lower side of the mounting plate 10, the translation assembly 20 is concealed by the display screen 31 and the mounting plate 10, achieving a floating effect for the display screen 31, and the overall ceiling-mounted screen occupies a small space and is aesthetically pleasing.

Referring to FIG. 1, the display screen assembly 30 further includes display screen connectors 32. The display screen connectors 32 are at sides of the translation assembly 20 and the display screen 31, and respectively connected with the translation assembly 20 and the display screen 31. Thus, when the translation assembly 20 moves along a vehicle length direction, the display screen 31 of the display screen assembly 30 can be driven to move in the vehicle length direction via the display screen connectors 32.

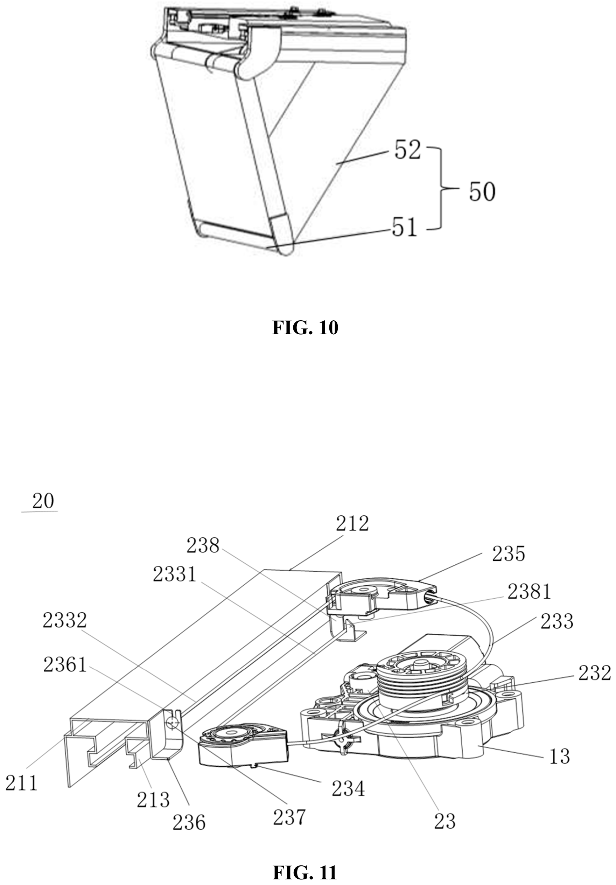

Referring to FIG. 1 and FIG. 11, the translation assembly 20 includes a movable guide rail 21, a fixed guide rail 22, and a first driving component 23. The fixed guide rail 22 is fixed at the upper side of the mounting plate 10. In some embodiments, the fixed guide rail 22 and the mounting plate 10 are integrally injection molded to enhance a connection strength between the mounting plate 10 and the fixed guide rail 22. The movable guide rail 21 is slidably connected to the fixed guide rail 22. The first driving component 23 is at the upper side of the mounting plate 10 and is configured to drive the movable guide rail 21 to slide linearly relative to the fixed guide rail 22 in the vehicle length direction.

In some embodiments, the movable guide rail 21 has a hollow structure or is made of lightweight material, thereby reducing an output power required when the first driving component 23 drives the movable guide rail 21 to slide linearly in the vehicle length direction. Additionally, the sliding length of the movable guide rail 21 needs to be determined in combination with the length of the movable guide rail 21 and the lengths of the fixed guide rail 22 and the mounting plate 10 in the vehicle length direction.

In the embodiment shown in FIG. 1 and FIG. 11, the top of the fixed guide rail 22 has a groove-shaped structure with an upward opening, and the bottom of the movable guide rail 21 has an engaging portion 213 engaged within the groove-shaped structure. The maximum width of the engaging portion 213 is greater than the maximum width of the opening at the top of the fixed guide rail 22, thereby ensuring that the movable guide rail 21 can only slide linearly in the vehicle length direction within the groove-shaped structure, preventing the fixed guide rail 22 and the movable guide rail 21 from disengaging.

In addition to the above considerations regarding disengagement between the fixed guide rail 22 and the movable guide rail 21, it is also necessary to pay attention to the axial movement of the movable guide rail 21 in the vertical direction and the horizontal direction, which may pull the fixed guide rail 22 and affect the connection stability between the fixed guide rail 22 and the mounting plate 10. In the embodiment shown in FIG. 1, outer walls of the engaging portion 213 abut against inner walls of the groove-shaped structure of the fixed guide rail 22, thereby restricting the axial movement of the engaging portion 213 in the vertical direction and the horizontal direction, i.e., restricting the axial movement of the movable guide rail 21 in the vertical direction and the horizontal direction.

The gravity of the movable guide rail 21 can also help restrict the axial movement in the vertical direction. A flexible component and/or an elastic component can also be placed between the outer walls of the engaging portion 213 and the inner walls of the groove-shaped structure to further restrict the axial movement of the engaging portion 213 in the vertical direction and the horizontal direction, while also reducing the impact and squeezing force between the engaging portion 213 and the groove-shaped structure.

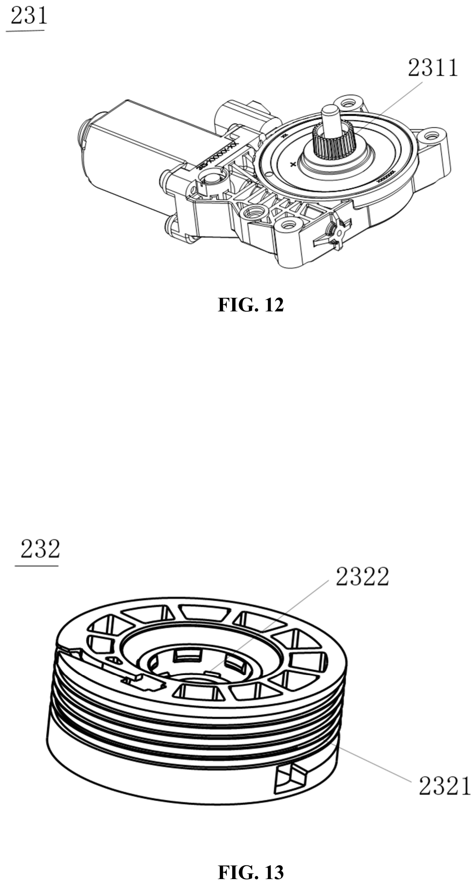

In addition to ensuring the stability of the linear sliding of the movable guide rail 21 and the fixed guide rail 22 through the structural characteristics of the translation assembly 20, the embodiment further provides a first driving component 23. Referring to FIG. 11 to FIG. 13, the first driving component 23 includes a first motor 231, a cable reel 232, and a cable 233. The outer wall of the cable reel 232 is circumferentially provided with a groove 2321 with a spiral arrangement. The middle portion of the cable 233 is wound within the groove 2321 of the cable reel 232, and the two ends of the cable 233 are arranged opposite to the rotation direction of the cable reel 232. The output shaft of the first motor 231 is coaxially arranged with the cable reel 232. When the output shaft of the first motor 231 rotates, the cable 233 is driven to wind around the cable reel 232 in forward rotation or reverse rotation.

In some embodiments, the periphery of the output shaft of the first motor 231 is provided with external teeth 2311, and the inner wall of the cable reel 232 has internal teeth 2322 meshing with the external teeth 2311. When the first motor 231 drives the output shaft to rotate forward or in reverse, the cable reel 232 is synchronously driven to rotate forward or reverse, ultimately causing the lengths of the two ends of the cable 233 on the cable reel 232 to change, thereby achieving linear sliding of the movable guide rail 21.

In this embodiment, referring to FIG. 11, the first driving component 23 further includes a first cable end fixing portion and a second cable end fixing portion. The first cable end fixing portion includes a first cable end fixing plate 236 and a first nail cap 237. The first cable end fixing plate 236 is fixed to the first end 211 of the movable guide rail 21 and at a side close to the first driving component 23. The first cable end fixing plate 236 is provided with a first notch 2361. The first nail cap 237 is connected to the tail end 2332 of the cable 233 and fixed in the first notch 2361.

The second cable end fixing portion includes a second cable end fixing plate 238 and a second nail cap (not shown in the figure). The second cable end fixing plate 238 is fixed to the second end 212 of the movable guide rail 21 and at a side close to the first driving component 23, i.e., the first cable end fixing plate 236 and the second cable end fixing plate 238 are arranged on the same side. The second cable end fixing plate 238 is provided with a second notch 2381. The second nail cap is connected to the head end 2331 of the cable 233 and fixed in the second notch 2381.

In some embodiments, to ensure the stability of the cable 233 during movement and reduce the tension of the cable 233, making the linear sliding of the movable guide rail 21 connected to the cable 233 smoother, as shown in FIG. 11, the first driving component 23 further includes a first bracket 234 and a second bracket 235. The first bracket 234 is at the top of the mounting plate 10 and at the first end 211 of the movable guide rail 21. The second bracket 235 is connected to the second end 212 of the movable guide rail 21. The head end 2331 of the cable 233 passes through the first bracket 234 and is fixed to the second end 212 of the movable guide rail 21 via the second cable end fixing portion. The tail end 2332 of the cable 233 passes through the second bracket 235 and is fixed to the first end 211 of the movable guide rail 21 via the first cable end fixing portion.

To prevent the head end 2331 of the cable 233 and the tail end 2332 of the cable 233 from overlapping and rubbing, the second bracket 235 is connected above the head end 2331 of the cable 233, and the head end 2331 of the cable 233 and the tail end 2332 of the cable 233 are arranged vertically.

The extension and retraction processes of the first driving component 23 are described below.

Extension process of the first driving component 23: the first motor 231 drives the cable reel 232 to rotate counterclockwise. At this time, the tail end 2332 of the cable 233 is released and extended from the groove 2321, while the head end 2331 of the cable 233 is retracted and wound into the groove 2321. When the head end 2331 of the cable 233 is retracted and wound into the groove 2321, the second cable end fixing portion is driven to move towards the direction close to the first bracket 234, thereby achieving extension of the movable guide rail 21.

Retraction process of the first driving component 23: after the above extension process is completed and the ceiling-mounted screen needs to be retracted, the first motor 231 drives the cable reel 232 to rotate clockwise. At this time, the head end 2331 of the cable 233 is released and extended from the groove 2321, while the tail end 2332 of the cable 233 is retracted and wound into the groove 2321. When the tail end 2332 of the cable 233 is retracted and wound into the groove 2321, the first cable end fixing portion is driven to move towards the direction close to the first bracket 234. As shown in FIG. 1, the retraction of the movable guide rail 21 is completed, and the first cable end fixing portion moves near the first bracket 234.

In this embodiment, referring to FIG. 1 and FIG. 14 to FIG. 15, the upper side of the mounting plate 10 is provided with a mounting portion. The mounting portion includes a cable reel base 13 and a cable reel cover plate 14. The cable reel base 13 is at the upper side of the mounting plate 10. The cable reel cover plate 14 covers the cable reel base 13 to form a chamber for accommodating the first motor 231 and the cable reel 232.

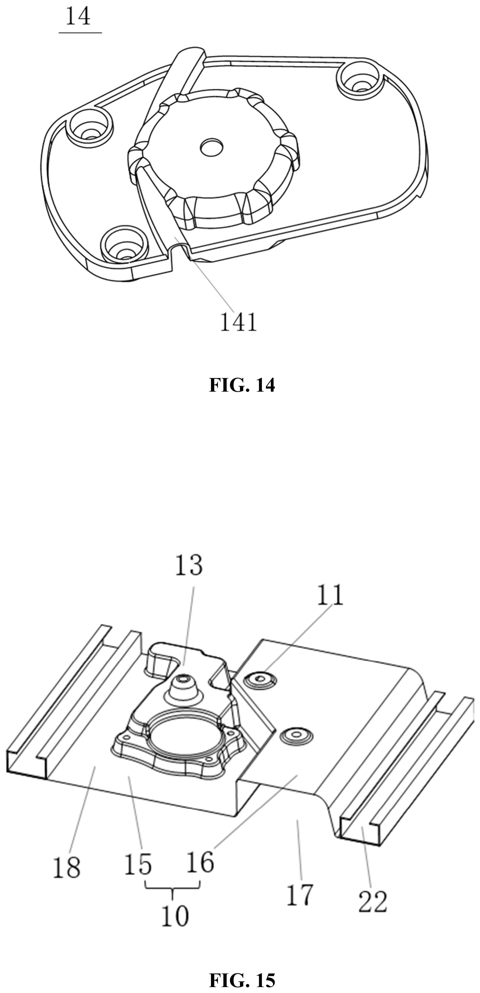

In some embodiments, the cable reel base 13 is integrally formed with the mounting plate 10. The cable reel cover plate 14 and the cable reel base 13 are fixed together by screws after being snap-fitted, thereby providing a limiting effect on the first motor 231 and the cable reel 232 within the chamber. To facilitate the extension or retraction of the cable 233 from the chamber, the cable reel cover plate 14, as shown in FIG. 14, is also provided with a cable guide groove 141 for the cable 233 to extend out or retract.

Of course, the above description is only an embodiment for driving the movable guide rail 21 to translate in the vehicle length direction. This application is not limited thereto, and other methods such as sliding cooperation of sliders and slide rails or chain transmission can also be used. The specific translation structure of the movable guide rail 21 is not limited here.

In some embodiments, as shown in FIG. 1, there are two translation assemblies 20 symmetrically arranged at two ends of the upper side of the mounting plate 10 to enhance the stability of the horizontal movement of the movable guide rail 21. Of course, one translation assembly 20 can also be provided. In some embodiments, when there is one translation assembly 20, the translation assembly 20 is at the middle position of the top of the mounting plate 10. Additionally, three translation assemblies 20, four translation assemblies 20, or more translation assemblies 20 can be provided in combination with the size of the mounting plate 10, which is not limited here.

The size of the display screen 31 in the vehicle width direction is greater than or equal to the sizes of the mounting plate 10 and the translation assembly 20 in the vehicle width direction, thereby allowing the display screen 31 to conceal the mounting plate 10 and the translation assembly 20, creating a feeling of floating movement for the display screen 31 during linear sliding process of the display screen 31, and improving driving experience of the passenger.

The display screen 31 is connected to the movable guide rail 21 in the translation assembly 20. In some embodiments, when there are provided two translation assemblies 20, there are provided two display screen connectors 32 which are respectively connected with the two translation assemblies 20 and the two ends of the display screen 31. In some embodiments, the display screen connector 32 is rotatably connected to the movable guide rail 21, thereby allowing adjustment of the viewing angle of the display screen 31 connected to the other end of the display screen connector 32 to meet different viewing angle needs of passengers.

In other embodiments, the other end of the display screen connector 32 is rotatably connected to the display screen 31. The display screen 31 is driven to rotate through rotation structure of the display screen 31 or a rotation mechanism connected to the display screen 31, thereby adjusting the viewing angle between the display screen 31 and the passenger.

As shown in FIG. 1, there are two translation assemblies 20 symmetrically arranged at two ends of the top of the mounting plate 10. To reduce the weight of the first driving component 23 and simplify a structure of the first driving component 23, the first driving component 23 is only provided at an end of the mounting plate 10, i.e., only one first driving component 23 is provided. However, considering the need to synchronously drive the other translation assembly 20 to move, the same display screen 31 is connected via two display screen connectors 32. When the first driving component 23 drives the movable guide rail 21 of one translation assembly 20 to slide, the display screen connectors 32 connected to the movable guide rail 21 moves synchronously, thereby driving the display screen 31 to move, and finally the other translation assembly 20 connected to the other end of the display screen 31 also moves synchronously.

In some embodiments, the vehicle ceiling-mounted screen further includes a connection plate 24. The connection plate 24 is below the mounting plate 10 and connected to the movable guide rail 21. In this embodiment, the connection plate 24 connects the two movable guide rails 21, such that when the movable guide rail 21 of one translation assembly 20 slides, the movable guide rail 21 of the other translation assembly 20 can be driven to slide through the connection plate 24.

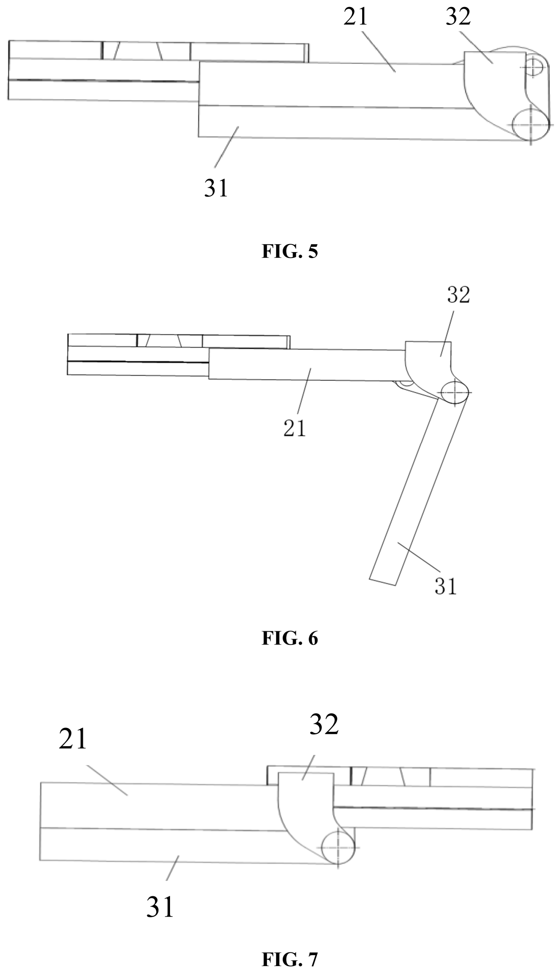

In some embodiments, referring to FIG. 2, the vehicle ceiling-mounted screen further includes a flip assembly 40. The flip assembly 40 is on the connection plate 24. The flip assembly 40 is connected to the display screen 31 and drives the display screen 31 to flip up or down, thereby adjusting the viewing angle of the passenger watching the display screen and improving the driving experience of the passenger. FIG. 3 to FIG. 8 show schematic diagrams of the display screen 31 when moved to a front end or a rear end and in an open state or a closed state.

As shown in FIG. 3 and FIG. 15, the mounting plate 10 has a bottom plate 15 and a top plate 16 above the bottom plate. A first accommodating space 17 is formed below the top plate 16, and a second accommodating space 18 is formed above the bottom plate 15. In this embodiment, the bottom plate 15 and the top plate 16 are connected by vertically arranged plates and integrally formed to improve the overall structural strength of the mounting plate 10. The bottom plate 15 and the top plate 16 can also be connected by plates of other structures, which is not limited here.

The first driving component 23 is in the second accommodating space 18, and the highest point of the first driving component 23 in the second accommodating space 18 is not higher than the upper side height of the top plate 16. Part of the flip assembly 40 is in the first accommodating space 17, reducing the exposure of the flip assembly 40 and making the overall structure of the ceiling-mounted screen aesthetically pleasing.

In some embodiments, as shown in FIG. 2, the flip assembly 40 includes a link assembly 41 and a second driving component 42. An end of the link assembly 41 is fixedly connected to the display screen 31, and the other end of the link assembly 41 is hingedly connected to the second driving component 42. The second driving component 42 drives the link assembly 41 to move in the vehicle length direction, thereby driving the link assembly 41 to rotate, and finally causing the display screen 31 fixed to the link assembly 41 to flip.

In some embodiments, to improve the connection stability between the link assembly 41 and the display screen 31, the display screen assembly 30 further includes a display screen shaft 33. The display screen 31 is connected to the display screen shaft 33. The two ends of the display screen shaft 33 are respectively connected to the display screen connectors 32. An end of the link assembly 41 is fixedly connected to the middle portion of the display screen shaft 33.

The link assembly 41 includes a first link rod 411 and a second link rod 412. An end of the first link rod 411 is fixedly connected to the display screen shaft 33. In some embodiments, an end of the first link rod 411 is fixedly connected to the middle portion of the display screen shaft 33; the other end of the first link rod 411 is hingedly connected to an end of the second link rod 412, and the other end of the second link rod 412 is hingedly connected to the second driving component 42.

The end of the connection plate 24 close to the display screen 31 is provided with a strip-shaped gap 241 for the rotation of the first link rod 411 and the second link rod 412, as shown in FIG. 1. In this embodiment, as shown in FIG. 4, when the second link rod 412 abuts against the strip-shaped gap 241, the second link rod 412 cannot continue to rotate downward due to the length limitation of the strip-shaped gap 241. At this time, the hinge point between the first link rod 411 and the second link rod 412 is above the line connecting the connection center point between the first link rod 411 and the display screen 31 and the connection center point between the second link rod 412 and the second driving component 42. The advantage of this design is that it is facilitated for the first link rod 411 and the second link rod 412 to drive the display screen 31 to rotate reversely along the original rotation path to the closed state.

In this embodiment, the sliding distance of the slider 421 of the second driving component 42 and the lengths of the first link rod 411 and the second link rod 412 further restrict the first link rod 411 from driving the second link rod 412 to continue rotating downward along the original rotation direction, which would cause the display screen 31 to flip upward along the original rotation direction after flipping downward, making it impossible to rotate to the closed state.

Additionally, the second driving component 42 includes a slider 421, a second motor 422, and a screw rod 423. The other end of the second link rod 412 is hingedly connected to the slider 421. The second motor 422 drives the slider 421 to translate on the screw rod 423, thereby driving the rotation of the second link rod 412.

In some embodiments, referring to FIG. 1, the vehicle ceiling-mounted screen further includes a ceiling-mounted screen fixing component 12 for connecting to the vehicle roof. The ceiling-mounted screen fixing component 12 is fixed at the upper side of the top plate 16, i.e., the upper side of the mounting plate 10. The size of the display screen 31 in the vehicle width direction is greater than or equal to the size of the ceiling-mounted screen fixing component 12 in the vehicle width direction, such that the ceiling-mounted screen fixing component 12 can also be concealed by the display screen 31, thereby achieving a floating display screen effect 31. In some embodiments, the top periphery of the ceiling-mounted screen fixing component 12 is provided with an adhesive layer, which is adhered to the sunroof glass or roof panel after applying adhesive.

Furthermore, as shown in FIG. 15, the mounting plate 10 is provided with a ceiling-mounted screen mounting hole 11. The bottom of the ceiling-mounted screen fixing component 12 is detachably mounted in the ceiling-mounted screen mounting hole 11, for example, by bolts and nuts. It should be noted that, to reduce contact between the ceiling-mounted screen fixing component 12 and the first driving component 23, which may affect the driving effect of the first driving component 23 or the fixing effect of the ceiling-mounted screen fixing component 12 on the roof, the ceiling-mounted screen fixing component 12 and the first driving component 23 are arranged staggered.

In some embodiments, referring to FIG. 10, the vehicle ceiling-mounted screen further includes a roll-up assembly 50. The roll-up assembly 50 includes a roll-up mechanism 51 and a screen 52. The roll-up mechanism 51 is connected to the lower end of the display screen 31. An end of the screen 52 is connected to the mounting plate 10 or the connection plate 24, and the other end of the screen 52 is wound within the roll-up mechanism 51. When the display screen 31 flips downward, the roll-up mechanism 51 is synchronously driven to move downward, thereby pulling the screen 52 out from within the roll-up mechanism 51. It can also cooperate with projection device to enable viewing on both sides of the display screen 31 and the screen 52, meeting the needs of two rows of passengers watching simultaneously.

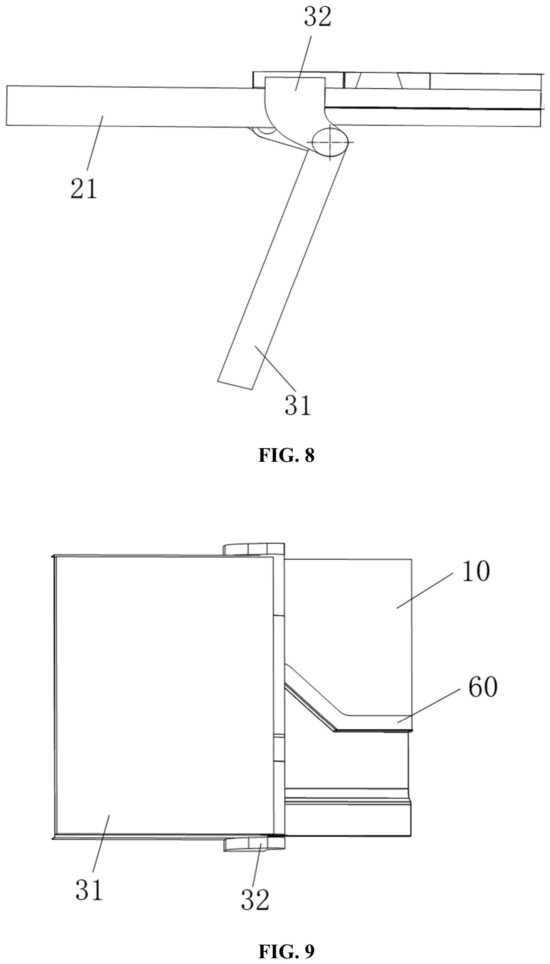

In some embodiments, referring to FIG. 9, the vehicle ceiling-mounted screen further includes an illumination component 60, including but not limited to a ceiling-mounted light. The illumination component 60 is mounted at the lower side of the mounting plate 10. When the display screen 31 is driven by the movable guide rail 21 to slide along the fixed guide rail 22, the illumination component 60 is gradually exposed as the display screen 31 moves.

Corresponding to the aforementioned embodiments of the vehicle ceiling-mounted screen, the specification further provides an embodiment of a vehicle applying the vehicle ceiling-mounted screen. By adhering the above-mentioned vehicle ceiling-mounted screen to the sunroof glass or roof panel of the vehicle, the human-machine viewing distance needs of different passengers can be met, improving the driving experience of passengers.

Those skilled in the art, after considering the specification and practicing the present application, will readily conceive of other implementations of this specification. The specification is intended to cover any variations, uses, or adaptive changes of the specification. These variations, uses, or adaptive changes follow the general principles of the specification and include common general knowledge or conventional technical means in the art not claimed in the specification. The specification and embodiments are to be regarded as exemplary only, and the true scope and spirit of the specification are indicated by the following claims.

It should be understood that the specification is not limited to the precise structures described above and shown in the drawings, and various modifications and changes can be made without departing from the scope of the specification. The scope of the specification is limited only by the appended claims.

The above are some embodiments of the specification and are not intended to limit the specification. Any modifications, equivalent replacements, improvements, etc., made within the spirit and principles of the specification shall be included within the protection scope of the specification.

## Claims

1. A vehicle ceiling-mounted screen, comprising:
a mounting plate;
a translation assembly at an upper side of the mounting plate; and
a display screen assembly comprising a display screen, the display screen being at a lower side of the mounting plate, wherein the translation assembly is configured to drive the display screen assembly to move.

2. The vehicle ceiling-mounted screen according to claim 1, further comprising:
a roll-up assembly comprising a roll-up mechanism and a screen, wherein the roll-up mechanism is connected to a lower end of the display screen, an end of the screen is connected to the mounting plate, and another end of the screen is wound within the roll-up mechanism.

3. The vehicle ceiling-mounted screen according to claim 1, further comprising:
a roll-up assembly comprising a roll-up mechanism and a screen; and
a connection plate below the mounting plate and connected to a movable guide rail of the translation assembly;
wherein the roll-up mechanism is connected to a lower end of the display screen, an end of the screen is connected to the connection plate, and another end of the screen is wound within the roll-up mechanism.

4. The vehicle ceiling-mounted screen according to claim 2 or 3, wherein
when the display screen flips downward, the roll-up mechanism is synchronously driven to move downward, causing the screen within the roll-up mechanism to be pulled out.

5. The vehicle ceiling-mounted screen according to any one of claims 1 to 4, wherein
the display screen assembly further comprises display screen connectors, at sides of the translation assembly and the display screen, and connected with the translation assembly and the display screen;
wherein the translation assembly comprises a movable guide rail, a fixed guide rail, and a first driving component, the fixed guide rail is fixed at the upper side of the mounting plate, the movable guide rail is slidably connected to the fixed guide rail, and the first driving component is at the upper side of the mounting plate and configured to drive the movable guide rail to slide relative to the fixed guide rail in a vehicle length direction; and
wherein the display screen is connected to the movable guide rail via the display screen connectors.

6. The vehicle ceiling-mounted screen according to claim 5, wherein the first driving component comprises a first motor, a cable reel, and a cable;
wherein a middle portion of the cable is wound around the cable reel, two ends of the cable are respectively connected to two ends of the movable guide rail, and the two ends of the cable are arranged opposite to a rotation direction of the cable reel; and
wherein an output shaft of the first motor is coaxially arranged with the cable reel, and when the output shaft rotates, the cable is driven to wind around the cable reel in forward rotation or reverse rotation.

7. The vehicle ceiling-mounted screen according to claim 5, wherein the first driving component further comprises a first cable end fixing portion comprising a first cable end fixing plate and a first nail cap, wherein the first cable end fixing plate is fixed to a first end of the movable guide rail and at a side close to the first driving component; and
wherein the first cable end fixing plate is provided with a first notch, and the first nail cap is connected to a tail end of the cable and fixed in the first notch.

8. The vehicle ceiling-mounted screen according to claim 7, wherein the first driving component further comprises a second cable end fixing portion comprising a second cable end fixing plate and a second nail cap, wherein the second cable end fixing plate is fixed to a second end of the movable guide rail, and the first cable end fixing plate and the second cable end fixing plate are at a same side of the first driving component; and
wherein the second cable end fixing plate is provided with a second notch, and the second nail cap is connected to a head end of the cable and fixed in the second notch.

9. The vehicle ceiling-mounted screen according to claim 8, wherein the first driving component further comprises a first bracket and a second bracket, wherein the first bracket is at a top of the mounting plate and at the first end of the movable guide rail, the second bracket is connected to the second end of the movable guide rail; and
wherein the head end of the cable passes through the first bracket and is fixed to the second end of the movable guide rail via the second cable end fixing portion, and the tail end of the cable passes through the second bracket and is fixed to the first end of the movable guide rail via the first cable end fixing portion.

10. The vehicle ceiling-mounted screen according to any one of claims 6 to 9, wherein the mounting plate further comprises a mounting portion comprising:
a cable reel base fixed at the upper side of the mounting plate; and
a cable reel cover plate, covered the cable reel base to form a chamber for accommodating the first motor and the cable reel.

11. The vehicle ceiling-mounted screen according to any one of claims 5 to 10, wherein
there are two translation assemblies respectively arranged at two ends of the upper side of the mounting plate; there are two display screen connectors that are respectively connected with the two translation assemblies and two ends of the display screen; and
wherein a size of the display screen in a vehicle width direction is greater than or equal to sizes of the mounting plate and the two translation assemblies in the vehicle width direction.

12. The vehicle ceiling-mounted screen according to any one of claims 5 to 11, wherein
the vehicle ceiling-mounted screen further comprises a connection plate below the mounting plate and connected to the movable guide rail; and
wherein the vehicle ceiling-mounted screen further comprises a flip assembly on the connection plate and configured to drive the display screen to flip up or down.

13. The vehicle ceiling-mounted screen according to claim 12, wherein
the mounting plate has a bottom plate and a top plate above the bottom plate, a first accommodating space is formed below the top plate, and a second accommodating space is formed above the bottom plate; and
wherein the first driving component is in the second accommodating space, and a part of the flip assembly is in the first accommodating space.

14. The vehicle ceiling-mounted screen according to claim 12, wherein
the flip assembly comprises a link assembly and a second driving component, wherein the link assembly comprises a first link rod and a second link rod, an end of the first link rod is fixedly connected to the display screen, another end of the first link rod is hingedly connected to an end of the second link rod, and another end of the second link rod is hingedly connected to the second driving component; and
wherein an end of the connection plate close to the display screen is provided with a strip-shaped gap for rotation of the first link rod and the second link rod.

15. The vehicle ceiling-mounted screen according to claim 14, wherein
the display screen assembly further comprises a display screen shaft, the display screen is connected to the display screen shaft, two ends of the display screen shaft are respectively connected to the display screen connectors, and an end of the link assembly is fixedly connected to a middle portion of the display screen shaft.

16. The vehicle ceiling-mounted screen according to claim 15, wherein the link assembly comprises a first link rod and a second link rod, an end of the first link rod is fixedly connected to the middle portion of the display screen shaft, another end of the first link rod is hingedly connected to an end of the second link rod, and another end of the second link rod is hingedly connected to the second driving component.

17. The vehicle ceiling-mounted screen according to claim 16, wherein an end of the connection plate close to the display screen is provided with a strip-shaped gap for rotation of the first link rod and the second link rod.

18. The vehicle ceiling-mounted screen according to claim 16, wherein the second driving component comprises a slider, a second motor, and a screw rod, another end of the second link rod is hingedly connected to the slider, and the second motor is configured to drive the slider to translate on the screw rod to drive a rotation of the second link rod.

19. The vehicle ceiling-mounted screen according to claim 13, wherein
the vehicle ceiling-mounted screen further comprises a ceiling-mounted screen fixing component for connecting to a roof of a vehicle, the ceiling-mounted screen fixing component being fixed at an upper side of the top plate; and wherein a size of the display screen in a vehicle width direction is greater than or equal to a size of the ceiling-mounted screen fixing component in the vehicle width direction.

20. A vehicle, comprising the vehicle ceiling-mounted screen according to any one of claims 1 to 19.
